# EUROPÄISCHE PATENTSCHRIFT

(11) **EP 0 418 641 B1**
(45) Veröffentlichungstag und Bekanntmachung des Hinweises auf die Patenterteilung: **15.03.1995**
(21) Anmeldenummer: 90116986.2
(22) Anmeldetag: 04.09.1990
(51) Int. Cl.: H04L 7/033

(54) **Synchronisiereinrichtung für ein Digitalsignal**
A synchronization device for a digital signal
Dispositif de synchronisation pour un signal numérique

(30) Priorität: 19.09.1989 DE 3931258
(43) Veröffentlichungstag der Anmeldung: 27.03.1991
(73) Patentinhaber: SIEMENS AKTIENGESELLSCHAFT, 80333 München (DE)
(72) Erfinder: Friebel, Dirk, Dipl.-Ing., D-4040 Neuss 21 (DE)

(56) Entgegenhaltungen:
- EP-A- 0 225 587
- DE-A- 3 931 259
- GB-A- 2 171 577
- US-A- 4 805 195
- IEEE TRANSACTIONS ON CIRCUITS AND SYSTEMS, Bd. CAS25, Nr. 4, April 1978,New York, US; Seiten 222-228; W.C.LEUNG: "Optimum LSI Implementation for a Digital Phase-Locked Loop"

## Beschreibung

Die Erfindung betrifft eine Synchronisiereinrichtung für ein Digitalsignal nach dem Oberbegriff des Patentanspruchs 1.

Bei digitalen Systemen mit hoher Bitrate müssen wegen den Laufzeiten von digitalen Bauelementen spezielle Synchronisierungskonzepte verwendet werden. Aus dem Artikel "High speed (140 Mbit/s) switching techniques for broadband communications" (Zürich, Switzerland, 11-13 March 1986); Boettle, D.; Klein, M.; Kundig, A., ED.; Hartmann, R., ED.; Stand. Elektrik Lorenz AG, Stuttgart, Germany; IEEE, Zürich, Switzerland, PP. 97-100, (CONFERENCE PAPER) ist eine Synchronisiereinrichtung beschrieben, bei der das Digitalsignal über Verzögerungsglieder geführt wird. Einem aus drei Kippstufen bestehenden Phasendetektor, der mit gegeneinander verschobenen Taktsignalen arbeitet, wird vom Ausgang der Verzögerungsleitung das Datensignal zugeführt. Liegen die Schrittumschläge innerhalb eines durch die verzögerten Taktsignale gebildeten Synchronisierfensters, so wird die Verzögerungsdauer des Digitalsignals entsprechend geändert. Nachteilig ist hierbei, daß die Synchronisiereinrichtung für plesiochrone Signale nur beschränkt und für asynchrone Signale nicht verwendet werden kann, da eine Anpassung an die Phase des Digitalsignals durch die Länge der Verzögerungsleitung begrenzt wird. Außerdem werden einer Steuerlogik die Kriterien des Phasendetektors mit unterschiedlichen Takten geliefert.

Aufgabe der Erfindung ist es, eine auch für plesiochrone und asynchrone Datensignale mit hoher Bitrate geeignete Synchronisierung anzugeben.

Diese Aufgabe wird durch die im Patentanspruch 1 angegebenen Merkmale gelöst.

Vorteilhafte Ausbildungen der Erfindung sind in den abhängigen Ansprüchen angegeben.

Vorteilhaft bei der erfindungsgemäßen Synchronisiereinrichtung ist es, daß auch bei durch Frequenzunterschiede zwischen dem empfangenen Digitalsignal und dem internen Systemtakt bedingten Veränderungen der Phase kein Datenverlust mehr eintritt.

Vorteilhaft ist außerdem, daß keine verzögerten Taktsignale verwendet werden und dadurch die Komplexität der Steuerlogik geringer wird. Dies wird auch dadurch erreicht, daß bei einem Umschalten zwischen Vordergrund- und Hintergrundsynchronisierung die ausgegebenen Datenbits gegeneinander stets um eine Bitlänge verzögert sind.

Durch Parallelisieren oder Stopfen können die Ausgangsdaten weiterverarbeitet werden.

Vorteilhaft ist auch eine Mittelung bzw. Filterung der von der Phasenerkennung abgegebenen Kriterien.

Die Erfindung wird anhand eines Blockschaltbildes und von Ausführungsbeispielen näher erläutert.

Es zeigen:
- Figur 1: ein Blockschaltbild der Synchronisiereinrichtung,
- Figur 2: ein Schaltbild der Phasenerkennungen und der Steuerlogik,
- Figur 3: ein Zeitdiagramm zur Phasenerkennung,
- Figur 4: ein Diagramm zur Erläuterung der Steuerlogik,
- Figur 5: ein Ausführungsbeispiel der Verzögerungseinrichtung,
- Figur 6: ein zweites Ausführungsbeispiel der Verzögerungseinrichtung,
- Figur 7: eine Datenauswahlschaltung mit Verzögerungsgliedern,
- Figur 8: eine Datenauswahlschaltung mit einem Seriell-Parallel-Umsetzer und
- Figur 9: ein zugehöriges Zeitdiagramm.

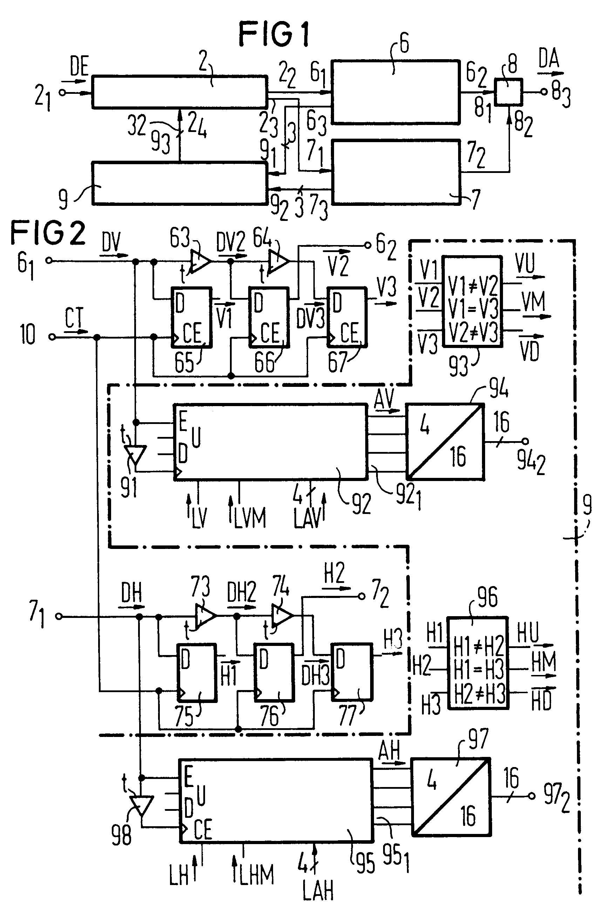

In Figur 1 ist das Prinzip der Synchronisiereinrichtung dargestellt. Einer Verzögerungseinrichtung 2 wird über ihren Eingang 2₁ das empfangene Digitalsignal DE zugeführt. Die Signalausgänge 2₂ und 2₃ sind jeweils mit einer Phasenerkennung 6 bzw. 7 verbunden. Die Datenausgänge 6₂ und 7₂ der Phasenerkennungen sind auf eine Ausgabeeinrichtung 8 geführt, an deren Ausgang 8₃ die Ausgangsdaten DA abgegeben werden. Die an den Ausgängen 6₃ bzw. 7₃ abgegebenen Phasenlagekriterien sind auf eine Steuerlogik 9 geführt, über die die Verzögerungseinrichtung 2 gesteuert wird.

Jede Phasenerkennung 6, 7 sorgt über die Steuerlogik 9 dafür, daß das Digitalsignal jeweils so verzögert wird, daß die Datenbits möglichst ideal in der Mitte abgetastet werden. Beide Phasenerkennungen arbeiten hierbei unabhängig voneinander. Dies ist hauptsächlich wegen der Toleranzen der Verzögerungseinrichtung notwendig. Die Synchronisiereinrichtung enthält gewißermaßen eine Vordergrundsynchronisierung, die aus einer Verzögerungsleitung der Verzögerungseinrichtung 2, der Phasenerkennung 6 und Teilen der Steuerlogik besteht und eine Hintergrundsynchronisierung, die aus einer zweiten unabhängig steuerbare Verzögerungsleitung der Verzögerungseinrichtung 2, der Phasenerkennung 7 und Teilen der Steuerlogik 9 besteht. Beide Synchronisiereinrichtungen arbeiten unabhängig voneinander, jedoch vor einem Umschalten von Vordergrund- auf Hintergrundsynchronisierung stets so, daß die Verzögerungseinrichtung ihnen um jeweils eine Bitlänge unterschiedlich verzögerte Digitalsignale liefert.

Bevor genauer auf die Funktion der Synchronisiereinrichtung eingegangen werden soll, sollen erst die Phasenerkennungen und die wesentlichen Teile der Steuerlogik näher erläutert werden.

In Figur 2 sind beide Phasenerkennungen und die wesentlichen Elemente der Steuerlogik dargestellt. Die Vordergrund-Phasenerkennung 6 besteht im wesentlichen aus drei D-Kippstufen 65, 66 und 67, deren Takteingängen CE über einen Anschlußpunkt 10 das System-Taktsignal CT (Chiptakt) zugeführt wird. Vom ersten Ausgang 2₂ der Verzögerungseinrichtung 2 wird das verzögerte Digitalsignal - nun auch als Vordergrunddaten DV bezeichnet - dem Dateneingang D der ersten D-Kippstufe 65 direkt und den Daten eingängen der weiteren D-Kippstufen 66 und 67 über ein Verzögerungsglied 63 bzw. über noch ein weiteres Verzögerungsglied 64 jeweils mit einer Verzögerungszeit "t" zugeführt. Das mehrfach phasenverschobene Digitalsignal DV, DV2, DV3 liefert an den Ausgängen der D-Kippstufen die Phasenlagekriterien, V1 bis V3, die einer Auswertelogik 93 zugeführt werden, deren Ausgänge VU, VD (Figur 1) mit Steuereingängen U, D eines ersten VorwärtsRückwärts-Zählers 92 verbunden sind. Die Ausgänge 92₁ des VR-Zählers steuern über einen Decoder 94 und dessen Ausgänge 94₂ eine Verzögerungsleitung der Verzögerungseinrichtung 2.

Die Hintergrund-Phasenauswertung ist entsprechend aufgebaut. Die D-Kippstufen sind mit 75 bis 77 bezeichnet, die Verzögerungsglieder mit 73 und 74 und die Phasenlagekriterien mit H1 bis H3. Diese sind entsprechend über eine zweite Auswertelogik 96 geführt, deren Ausgänge mit den entsprechenden Steuereingängen eines zweiten Vorwärts-Rückwärts-Zählers 95 verbunden sind. Dessen Ausgänge 95₁ steuern über einen zweiten Decoder 97, dessen Ausgänge mit 97₂ bezeichnet sind, beispielsweise eine zweite Laufzeitkette der Verzögerungseinrichtung 2. Beide Decoderausgänge 94₂ und 97₂ bilden den Ausgang 9₃ der Steuerlogik.

Bei diesem Ausführungsbeispiel werden aus Gründen einer vereinfachten Darstellung nur die positiven Flanken der Vordergrunddaten bzw. Hintergrunddaten bewertet und auch der Vorwärts-Rückwärts-Zähler wird nur von diesen gesteuert.

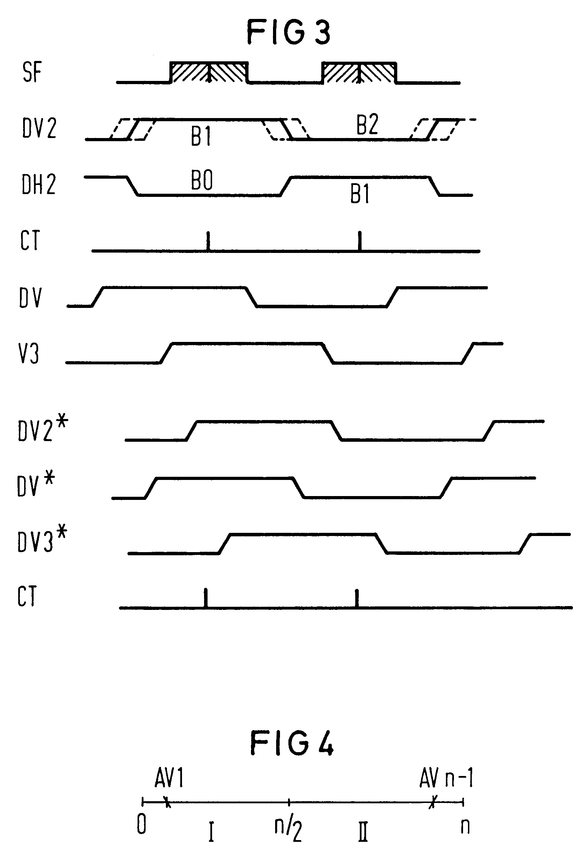

In Figur 3 sind in der zweiten Zeile des Zeitdiagramms die einmal verzögerten Vordergrunddaten DV2 am Ausgang des Verzögerungsgliedes 63 dargestellt. Der Flankenjitter wurde strichliert eingezeichnet. Jitterfreie Vordergrunddaten werden durch das System-Taktsignal CT in der Mitte abgetastet. Auch die unverzögerten Vordergrunddaten DV und die zweimal verzögerten Vordergrunddaten DV3 werden noch richtig abgetastet. Wenn alle Phasenlagekriterien V1 bis V3 übereinstimmen, ist daher von einer richtigen Synchronisierung auszugehen. Wenn jedoch die Frequenz des empfangenen Datensignals beispielsweise niedriger ist als die Frequenz des System-Taktsignals, dann verschieben sich die Vordergrunddaten gegenüber dem internen System-Taktsignal. Die entsprechenden Datensignale sind mit einem * gekennzeichnet. Hierdurch wird bei dem doppelt verzögerten Vordergrunddaten DV3* noch das vorangegangene Datenbit B0 abgetastet, während in die D-Kippstufen 65 und 66 bereits das folgende Datenbit B1 übernommen wird. Das am Ausgang 6₂ der D-Kippstufe 66 ausgegebene Datenbit ist zwar noch richtig abgetastet; die Abtastung erfolgte jedoch nicht mehr in der Mitte eines Bits. In diesem Fall muß synchronisiert werden, d.h. die Verzögerung in der Verzögerungseinrichtung muß geringer werden.

Wenn dagegen die Phasenlagekriterien V1 und V2 nicht mehr übereinstimmen, muß entsprechend die Verzögerung vergrößert werden.

Durch die gegeneinander phasenverschobenen Vordergrunddaten wird gewissermaßen (bezogen auf die als regeneriertes Digitalsignal ausgegebenen abgetasteten Vordergrunddaten DV2) ein Synchronisierfenster aufgespannt. Ergeben sich Verschiebungen der Flanke der Vordergrunddaten DV2 - hier im Beispiel - mehr als 25 %, so fällt die Flanke in das Synchronisierfenster und veranlaßt eine Änderung der Verzögerungszeit.

Die entsprechenden Steuersignale werden von der Auswertelogik 93 geliefert. Ist V1 ungleich V2, wird ein Steuersignal VU (aufwärts) abgegeben, das auf dem Steuereingang U des VorwärtsRückwärts-Zählers 92 (VR-Zählers) geführt ist und ihn veranlaßt' um den Wert 1 aufwärts zu zählen und damit die Verzögerungszeit zu vergrößern; ist V2 ungleich V3, wird ein Signal VD (abwärts) gegeben, das auf den Eingang D des VR-Zählers 92 geführt ist und ihn veranlaßt, durch Abwärtszählen die Verzögerungszeit zu veringern. Im Ausführungsbeispiel handelt es sich um einen 4-bit-Zähler, dessen Ausgänge 92₁ über den Decoder 94 die Verzögerungseinrichtung steuert.

Die positive Flanke des ausgewerteten Signalbits sorgt hier über das Verzögerungsglied 91 für die Taktung des VR-Zählers.

In derselben Weise erfolgt eine Synchronisierung durch die Hintergrundphasenerkennung 7. Hierbei gibt es jedoch eine Besonderheit. Die Verzögerungseinrichtung ist so ausgebildet, daß die Verzögerungszeit auch unter Berücksichtigung der Bausteinetoleranzen mindestens die Dauer eines Signalbits umfaßt. Die Vordergrund-Synchronisierung arbeitet gewißermaßen als Master-Synchronisierung. Erst wenn die Zählstellung des VR-Zählers 92 sich einem der Extremwerte 0 oder n nähert, d.h., die Verzögerung sich dem Minimal- bzw. dem Maximalwert nähert, wird beispielsweise ab dem Zählerstand AV1 bzw. AVn-1 auf die Hintergrundsynchronisierung umgeschaltet (Figur 4) und deren Hintergrunddaten DH anstelle der Vordergrunddaten DV werden ausgegeben. Die Verzögerungseinrichtung wird hierbei so gesteuert, daß die Verzögerungsdauer zwischen Vordergrund- und Hintergrunddaten einen Unterschied von einem Bit ausmacht. Diese Steuerung kann beispielsweise durch ein vom Zählerstand des ersten VR-Zählers 92 abhängig gemachtes Laden des zweiten VR-Zählers 95 durch eine Ladeadresse LAH und einen Ladeimpuls LH erfolgen. Bei einem Zählerstand 1 des ersten VR-Zählers 92 wird der zweite VR-Zähler 95 auf den Zählerstand n-1 gestellt und umgekehrt. Oder der zweite VR-Zähler wird bei einem Zählerstand AV = 1 auf einen Zählerstand von mindestens AH = AV+1 = 2 besser AH = AV+n/2 gestellt und muß dann aufwärts zählen bis die Hintergrunddaten richtig abgetastet werden. Befindet sich der Zählerstand des ersten VR-Zählers 92 (Figur 2) dagegen im zweiten Bereich II wird der Zählerstand des zweiten VR-Zählers 95 (Figure 2) entsprechend erniedrigt bis er um eine Bitdauer früher die Hintergrunddaten DH korrekt abtastet. Bei einem weiteren "Laufen" der Vordergrundsynchronisierung läuft dann die Hintergrundsynchronisierung im gleichen Sinn mit. Hierbei sind zahlreiche Schaltungsvarianten möglich.

Wie bereits aus der vorstehenden Beschreibung hervorgeht, arbeitet die Vordergrund-Phasenerkennung priorisiert, erst wenn durch die Vordergrund-Phasenerkennung eine sichere Datenbitmitte gefunden wurde, beginnt die Phasenerkennung der Hintergrund-Synchronisierung sich einzustellen. Nach einer Umschaltung auf die Hintergrund-Synchronisierung wird der erste VR-Zähler 92 entsprechend der Zähleradresse des zweiten VR-Zählers 95 eingestellt, hierzu wird der Zählerstand - als Hintergrundadresse HA bezeichnet - als Ladeadresse-Vordergrund LAV über die entsprechenden Ladeeingänge und einem Ladeimpuls LV vom ersten VR-Zähler 92 übernommen. Die Hintergrund-Phasenerkennung braucht erst dann wieder aktiv zu werden, wenn sich der Zählerstand - als Vordergrundadresse AV bezeichnet - des ersten VR-Zählers einem der Extremwerte nähert. Da es sich in der Regel um Datensignale hoher Frequenzkonstanz handelt, erfolgt das Umschalten zwischen Vordergrund- und Hintergrundsynchronisierung relativ selten. Daher ist es möglich, die von der Auswertelogik gelieferten Steuersignale zu filtern bzw. zu mitteln. Der einfachste Weg hierzu ist die Vergrößerung des VR-Zählers. Bei Datenjitter werden die Aufwärts- und Abwärtskriterien VU und VD gemittelt und erst eine größere Differenz führt zu einem Synchronisierschnitt. Ein digitales Filter führt zu noch besseren Ergebnissen. Dann können auch mehrere als drei Kippstufen bei der Phasenerkennung verwendet werden, die Synchronisierfenster mit unterschiedlicher Wertigkeit bilden, um eine exaktere Abtastung des Digitalsignals in den Bitmitten zu erreichen. Das Kriterium VM, das angibt, daß die Abtastung korrekt erfolgte, kann ebenfalls zur Steuerung des erweiterten VR-Zählers bzw. des digitalen Filters verwendet werden.

Es ist selbstverständlich, daß die Breite des Synchronisierfensters und die Zeitkonstanten zur Verstellung der Verzögerungseinrichtung den Systembedingungen angepaßt werden. Ebenso kann natürlich bei einer Neusynchronisierung der Mittelwert der Zähler eingestellt werden usw.

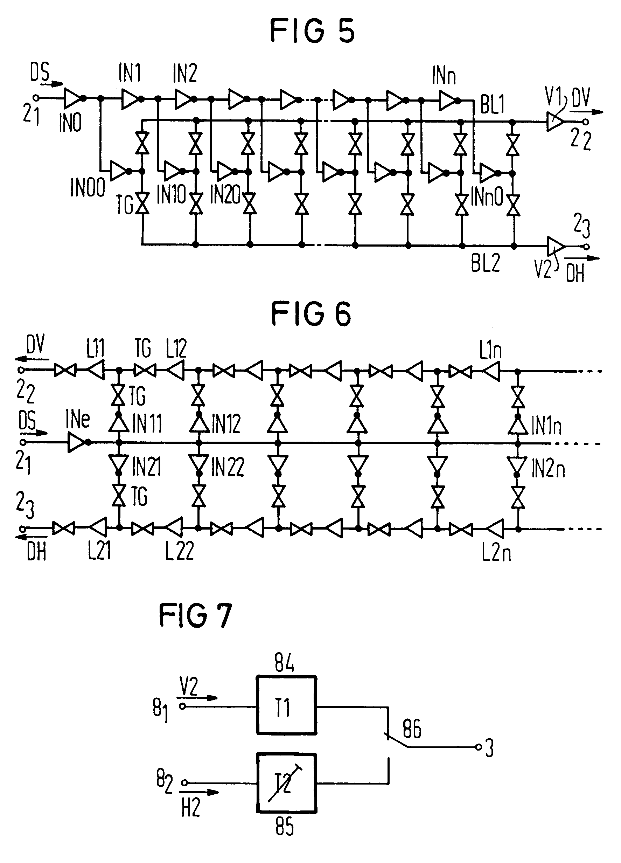

Ein Ausführungsbeispiel der Verzögerungseinrichtung ist in Figur 5 dargestellt. Das Digitalsignal wird einer Reihenschaltung von Invertern IN0-INn zugeführt. Vom Ausgang jedes Inverters führt ein weiterer Inverter IN00-INn0 auf die zusammengeschalteten Eingänge zweier Transmission-Gates TG, deren Ausgänge an zwei verschiedene Busleitungen BL1 und BL2 angeschaltet sind und gegenüber den Ausgängen 2₂ und 2₃ der Verzögerungseinrichtung durch Verstärker V1 und V2 entkoppelt sind. Die Inverter dienen als Laufzeitglieder.

Die Laufzeiteinstellung erfolgt, indem jeweils das geeignete Transmission-Gate auf jeweils eine Busleitung durchgeschaltet wird, während alle anderen gesperrt werden. Diese Verzögerungseinrichtung kommt zwar mit einem geringen Schaltungsbedarf aus, es müssen jedoch sämtliche Transmission-Gates angesteuert werden.

In Figur 6 ist die Verzögerungseinrichtung durch zwei Laufzeitketten realisiert. Ober einen Eingangsinverter INe wird das Digitalsignal zunächst entkoppelt. An den Ausgang des Eingangsinverters sind Inverter IN11-IN1n und IN21-IN2n angeschaltet. In Reihe mit ihnen liegt jeweils ein Transmission-Gate. Außerdem sind Laufzeitglieder L11-L1n vorgesehen, die jeweils ein weiteres Transmission-Gate in Reihe geschaltet sind. Die Inverter IN11-IN1n sind jeweils über ein ihren zugeordnetes Transmission-Gate mit dem Eingang eines dieser Laufzeitglieder L11-L1n verbunden. In derselben Weise sind die Inverter IN21-IN2n an eine zweite Reihenschaltung von Laufzeitgliedern L21-L2n angeschaltet. Die Laufzeitglieder L11 und L21 sind hierbei den Ausgängen 2₂ und 2₃ am nächsten und die Laufzeitglieder L1n und L2n am entferntesten. Diese Schaltungsanordnung benötigt zwar mehr Bauteile, es müssen jedoch weniger Lasten angesteuert werden. Je nach Technologie können gegebenenfalls die Inverter IN11 und IN21, IN12 und IN22 usw. durch einen einzigen Inverter ersetzt werden. Auch die Laufzeitglieder L11, L21 und die Inverter IN11 und IN21 kann gegebenenfalls ganz verzichtet werden.

Die durch Abtastung regenerierten Digitalsignale sind identisch mit dem Phasenlagekriterium V2 bzw. mit dem Phasenlagekriterium H2 bei der Hintergrund-Phasenerkennung. Von diesen Digitalsignalen wird durch die Datenauswahlschaltung 8 jeweils eines zur Weitergabe bzw. Weiterverarbeitung ausgewählt. Die Auswahl muß natürlich so erfolgen, daß die Bits des Ausgangssignals DA in der richtigen Reihenfolge stehen. Hierzu sind zahlreiche Schaltungsvarianten möglich, von denen zwei näher erläutert werden sollen.

Eine für synchrone Datensignale geeignete Datenauswahlschaltung ist in Figur 7 angegeben. Sie enthält im wesentlichen zwei Verzögerungsglieder 84 und 85, denen die regenerierten Datensignale V2 bzw. H2 zugeführt werden. Der Einfacherheithalber wird angenommen, daß die Verzögerungszeit T1 des ersten Verzögerungsgliedes 84 eine Bitdauer beträgt. Wenn jetzt auf die Hintergrund-Phasenerkennung umgeschaltet werden soll, wird anstelle des Digitalsignals V2 das Digitalsignal H2 an den Ausgang durchgeschaltet. Hierbei sind zwei Fälle möglich. Das Digitalsignal H2 ist gegenüber dem Digitalsignal V2 um eine Bitdauer verzögert. Dann wird die Verzögerungszeit T2 des zweiten Verzögerungsgliedes 85 auf Null gestellt und die Ubernahme kann ohne Datenverlust von der Hintergrundsynchronisiereinrichtung erfolgen. Eilt dagegen das Digitalsignal H2 dem Digitalsignal V2 um eine Bitdauer vor, wird die Verzögerungszeit des zweiten Verzögerungsgliedes auf 2 Bits eingestellt, wodurch ein Umschalten zwischen beiden Digitalsignalen ohne Datenverlust wieder möglich ist. Als Verzögerungsglieder eignen sich Schieberegister mit umschaltbarer Länge. Diese Anordnung ist für synchrone und im gewissen Rahmen auch für plesiochrone Datensignale möglich. Die maximal zulässige Phasenabweichung zwischen dem Digitalsignal und dem internen System-Taktsignal wird von der Verzögerungseinrichtung und der Anzahl der Verzögerungsglieder bestimmt.

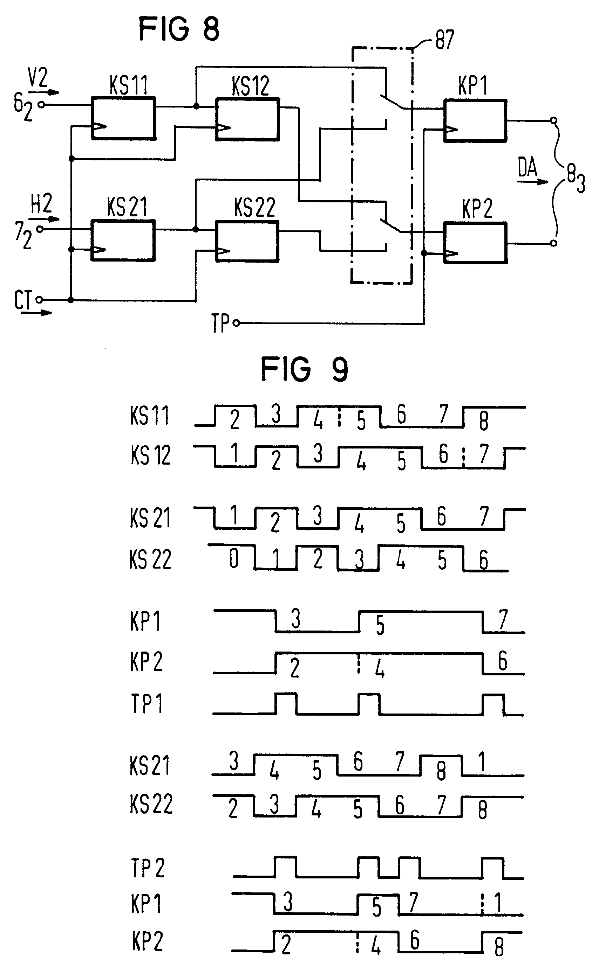

Eine mit Seriell-Parallel-Umsetzung arbeitende Datenauswahlschaltung ist in Figur 8 dargestellt. Sie enthält zwei Schieberegister, die jeweils aus zwei Kippstufen KS11, KS12 und KS21, KS22 bestehen. Jedem der Schieberegister wird ein regeneriertes Digitalsignal V2 bzw. H2 zugeführt. An den Takteingängen liegt der System-Taktsignal CT an. Außerdem sind zwei Ausgangs-Kippstufen KP1 und KP2 vorgesehen, deren Dateneingänge über einen mehrpoligen Umschalter 87 an die Ausgänge des einen oder des anderen Schieberegisters anschaltbar sind. An deren Takteingängen liegt ein Parallel-Taktsignal TP an, das in der Regel die halbe Frequenz des System-Taktsignals CT aufweist.

Durch die Schieberegister werden die seriellen Digitalsignale Y2, H2 in parallele Signale mit einer 2-bit-Wortbreite umgesetzt. Die Ubernahme der parallelen Signalbits erfolgt mit dem Paralleltakt TP in die Ausgangs-Kippstufen KP1 und KP2. Ist die Frequenz des empfangenen Digitalsignals gegenüber dem System-Taktsignal zu niedrig, wird beim Unschalten zwischen den Schieberegister ein Impuls des Parallel-Taktsignals TP ausgeblendet. In dem in Figur 9 dargestellten Zeitdiagramm ist das entsprechende Parallel-Taktsignal mit TP1 bezeichnet. Weist dagegen das empfangene Digitalsignal eine höhere Frequenz als das System-Taktsignal auf, so muß beim Umschalten zwischen den Schieberegistern ein Impuls in das Parallel-Taktsignal eingeblendet werden. In Figur 9 ist das Parallel-Taktsignal für diesen Fall mit TP2 bezeichnet. Durch Stopfen oder mit Hilfe eines steuerbaren Oszillators (VCO) kann das Ausgangssignal DA wieder in ein kontinuirliches Digitalsignal umgesetzt werden.

## Patentansprüche

1. Synchronisiereinrichtung für ein Digitalsignal (DE) mit einer steuerbaren Verzögerungseinrichtung (2), an die eine Phasenerkennung (6) angeschaltet ist, die mit einem Systemtaktsignal (CT) das verzögerte Digitalsignal abtastet und über eine Steuerlogik (9) die Verzögerungszeiten der Verzögerungseinrichtung (2) steuert,
**dadurch gekennzeichnet,**
daß die Verzögerungseinrichtung (2) einen zweiten unabhängig steuerbaren Signalausgang (2₃) aufweist,
daß eine Hintergrund-Phasenerkennung (7) an diesen Ausgang angeschaltet ist,
daß die Steuerung der Verzögerungseinrichtung (2) so erfolgt, daß im einsynchronisierten Zustand die Phasenverschiebung zwischen den verzögerten Digitalsignalen (DV, DH) an den Signalausgängen (2₂, 2₃), mindestens wenn sich die Verzögerungszeit einem Extremwert nähert, ca. eine Bitdauer beträgt und daß beide in der Phasenerkennung (6) und Hintergrund-Phasenerkennung (7) abgetasteten regenerierten Digitalsignale (V2, H2) auf eine Datenauswahlschaltung (8) geführt werden.

2. Synchronisiereinrichtung nach Anspruch 1,
**dadurch gekennzeichnet**,
daß als Phasenerkennung (6, 7) jeweils mindestens drei Kippstufen (65, 66, 67) vorgesehen sind,
daß die Dateneingänge (D) der Kippstufen (65, 66, 67) über Verzögerungsglieder (63, 64) miteinander verbunden sind, so daß den Kippstufen das Digitalsignal (DV, DV2, DV3) jeweils mit einer anderen Phasenverschiebung zugeführt wird,
und daß die Takteingänge (CE) der Kippstufen (65, 66, 67) mit demselben System-Taktsignal (CT) getaktet werden.

3. Synchronisiereinrichtung nach Anspruch 2,
**dadurch gekennzeichnet**,
daß in der Steuerlogik (9) für jede Phasenerkennung (6, 7) ein Vorwärts-Rückwärts-Zähler (92, 95) vorgesehen ist, der in Abhängigkeit von den Phasenlagekriterien (VQ, VM, VD; HU, HM, HD) einer Auswertelogik (93; 96) gesteuert wird und dessen Zählerstand (AV; AH) die jeweilige Verzögerungszeit der Verzögerungseinrichtung (2) bestimmt.

4. Synchronisiereinrichtung nach Anspruch 3,
**dadurch gekennzeichnet**,
daß dem Vorwärts-Rückwärtszähler (92, 95) ein digitales Filter vor- oder nachgeschaltet ist.

5. Synchronisiereinrichtung nach einem der vorhergehenden Ansprüche,
**dadurch gekennzeichnet**,
daß als Verzögerungseinrichtung (2) zwei unabhängig voneinander steuerbare Laufzeitketten (L11-L1n, L21-L2n) vorgesehen sind.

6. Synchronisiereinrichtung nach einem der Ansprüche 1 bis 4,
**dadurch gekennzeichnet,**
daß nur eine Laufzeitkette mit Verzögerungsgliedern (IN0 bis INn) vorgesehen ist, deren Ausgänge auf zwei Busleitungen (BL1, BL2) durchschaltbar sind.

7. Synchronisiereinrichtung nach einem der vorhergehenden Ansprüche,
**dadurch gekennzeichnet**,
daß als Datenauswahlschaltung (8) zwei Verzögerungsglieder (84, 85) vorgesehen sind, deren Ausgänge mit einem elektronischen Umschalter (86) verbunden sind, und
daß mindestens bei einem Verzögerungsglied (85) die Verzögerungszeit jeweils um die Dauer eines Bits verstellbar ist.

8. Synchronisiereinrichtung nach einem der Ansprüche 1 bis 6,
**dadurch gekennzeichnet,**
daß als Datenauswahlschaltung (8) ein Seriell-Parallel-Wandler (KS11, KS12; KS21, KS22) mit einen nachgeschalteten mehrpoligen Umschalter (87) vorgesehen ist.

## Claims

1. Synchronization device for a digital signal (DE) having a controllable delay device (2), to which a phase detector (6) is connected, which samples the delayed digital signal with a system clock signal (CT) and controls the delay times of the delay device (2) via a control logic unit (9), characterized in that the delay device (2) has a second independently controllable signal output (2₃), in that a background phase detector (7) is connected to this output, in that the control of the delay device (2) is carried out in such a way that, in the synchronized state, the phase shift between the delayed digital signals (DV, DH) on the signal outputs (2₂, 2₃) is about one bit duration, at least when the delay time approaches an extreme value, and in that both regenerated digital signals (V2, H2) sampled in the phase detector (6) and background phase detector (7) are passed to a data selection circuit (8).

2. Synchronization device according to Claim 1, characterized in that at least three flip-flops (65, 66, 67) are respectively provided as phase detector (6, 7), in that the data inputs (D) of the flip-flops (65, 66, 67) are connected to each other via delay elements (63, 64) so that the digital signal (DV, DV2, DV3) is respectively fed to the flip-flops with a different phase shift, and in that the clock inputs (CE) of the flip-flops (65, 66, 67) are clocked with the same system clock signal (CT).

3. Synchronization device according to Claim 2, characterized in that in the control logic unit (9) for each phase detector (6, 7) an up-down counter (92, 95) is provided, which is controlled as a function of the phase position criteria (VQ, VM, VD; HU, HM, HD) of an evaluation logic unit (93; 96) and whose counter state (AV; AH) determines the respective delay time of the delay device (2).

4. Synchronization device according to Claim 3, characterized in that a digital filter is connected upstream or downstream of the up-down counter (92, 95).

5. Synchronization device according to one of the preceding claims, characterized in that two delay lines (L11-L1n, L21-L2n), which can be controlled independently of each other, are provided as delay device (2).

6. Synchronization device according to one of Claims 1 to 4, characterized in that only one delay line having delay elements (INO-INn) is provided, whose outputs can be switched through to two bus lines (BL1, BL2).

7. Synchronization device according to one of the preceding claims, characterized in that, as data selection circuit (8), two delay elements (84, 85) are provided, whose outputs are connected to an electronic change-over switch (86), and in that, in at least one delay element (85), the delay time can be adjusted in each case by the duration of one bit.

8. Synchronization device according to one of Claims 1 to 6, characterized in that a serial-parallel converter (KS11, KS12; KS21, KS22) having a multi-pole change-over switch (87) connected downstream is provided as data selection circuit (8).

## Revendications

1. Dispositif de synchronisation pour un signal numérique (DE), comportant un dispositif de retardement commandable (2), auquel est raccordée un circuit d'identification de phase (6), qui évalue le signal numérique retardé, avec un signal de cadence (CT) du système et commande, par l'intermédiaire d'une logique de commande (9), des retards produits par le dispositif de retardement (2), caractérisé par le fait
que le dispositif de retardement (2) possède une seconde sortie de signaux (2₃) devant être commandée de façon indépendante,
qu'un circuit (7) d'identification de phase d'arrière-plan est raccordé à cette sortie,
que la commande du dispositif de retardement (2) s'effectue de telle sorte qu'à l'état synchronisé, le déphasage entre les signaux numériques retardés (DV,DH) présents aux sorties de signaux (2₂,2₃) est égal environ à la durée d'un bit, au moins lorsque le temps de retard se rapproche d'une valeur extrême, et que les deux signaux numériques régénérés (V2,H2) échantillonnés dans le circuit d'identification de phase (6) et le circuit (7) d'identification de phase d'arrière-plan sont envoyés à un circuit de sélection de données (8).

2. Dispositif de synchronisation suivant la revendication 1, caractérisé par le fait
qu'il est prévu, comme circuit d'identification de phase (6,7), respectivement au moins trois étages à bascules (65, 66,67),
que les entrées de données (D) des étages à bascule (65,66, 67) sont reliées entre elles par l'intermédiaire de circuits de retardement (63,64) de sorte que le signal numérique (DV, DV2,DV3) est envoyé respectivement avec un autre déphasage aux étages à bascule, et
que les entrées de cadence (CE) des étages à bascule (65,66, 67) sont commandées de façon cadencée avec le même signal de cadence (CT) du système.

3. Dispositif de synchronisation suivant la revendication 2, caractérisé par le fait que dans la logique de commande (9) est prévu, pour chaque circuit d'identification de phase (6,7), un compteur progressif/régressif (92,95), qui est commandé en fonction des critères de position de phase (VQ,VM,VD; HU,HM,HD) d'une logique d'évaluation (93;96) et dont l'état de comptage (AV,AH) détermine le retard respectif introduit dans le dispositif de retardement (2).

4. Dispositif de synchronisation suivant la revendication 3, caractérisé par le fait qu'un filtre numérique est branché en amont ou en aval du compteur progressif-régressif (92,95).

5. Dispositif de synchronisation suivant l'une des revendications précédentes, caractérisé par le fait qu'il est prévu, comme dispositif de retardement (2), deux lignes à retard (L11-L1n; L21-L2n) qui peuvent être commandées indépendamment l'une de l'autre.

6. Dispositif de synchronisation suivant l'une des revendications 1 à 4, caractérisé par le fait qu'il est prévu une seule ligne à retard comportant des circuits de retardement (IN0 à INn) et dont les sorties peuvent être interconnectées directement à deux lignes formant bus (BL1,BL2).

7. Dispositif de synchronisation suivant l'une des revendications précédentes, caractérisé par le fait qu'il est prévu, comme circuit de sélection de données (8), deux circuits de retardement (84,85), dont les sorties sont reliées à un commutateur électronique (86), et que le retard peut être modifié respectivement d'une durée d'un bit au moins dans un circuit de retardement.

8. Dispositif de synchronisation suivant l'une des revendications 1 à 6, caractérisé par le fait qu'il est prévu, en tant que circuit de sélection de données (8), un convertisseur série-parallèle (KS11,KS12; KS21,KS22) en aval duquel sont branchés des commutateurs multipolaires (87).
